# EUROPÄISCHE PATENTSCHRIFT

(11) **EP 0 999 121 B1**
(45) Veröffentlichungstag und Bekanntmachung des Hinweises auf die Patenterteilung: **22.12.2004**
(21) Anmeldenummer: 99120204.5
(22) Anmeldetag: 09.10.1999
(51) Int. Cl.: B62K 21/16, B62K 21/12, B62K 21/14

(54) **Lenkstange**
Handlebar
Guidon

(30) Priorität: 05.11.1998 DE 19851016
(43) Veröffentlichungstag der Anmeldung: 10.05.2000
(73) Patentinhaber: Bayerische Motoren Werke Aktiengesellschaft, 80809 München (DE)
(72) Erfinder: Bleicher, Stephan, 84069 Schierling (DE); Brandl, Raimund, 94405 Landau (DE); Silomon, Martin, Dr., 80805 München (DE)

(56) Entgegenhaltungen:
- DE-A- 4 323 501
- DE-C- 810 584
- GB-A- 2 321 225
- US-A- 5 119 690

## Beschreibung

Die Erfindung betrifft eine Lenkstange, insbesondere für ein Zweirad, nach dem Oberbegriff des Hauptanspruchs.

Die DE 40 21 034 A1 beschreibt eine Lenkstange für Fahrräder, die aus einem oder mehreren Metallprofilteilen, beispielsweise aus einer Aluminiumlegierung gemäß der üblichen Technologie, hergestellt sein kann. Unter anderem weist sie ein im wesentlichen gerades Mittelteil auf, das mittig, unter Zuordnung zu einem verstärkten Bereich, mit der Lenksäule des Fahrrads fest verbunden werden kann. Außerdem weist sie zwei seitliche Griffstücke auf. Über die Verbindung des verstärkten Bereichs mit dem Mittelteil der Lenkstange ist weiter nichts offenbart.

Beanspruchungsgerechte Lenkstangen können so gestaltet sein, daß ein Mittelteil ein größeres Widerstandsmoment und einen größeren Querschnitt besitzt als Griffbereiche an den äußeren Enden der Lenkstange. Dazu werden zum Beispiel Rohrlenker von einem großen Durchmesser im Mittelteil mittels Einzug auf einen kleineren Durchmesser an den Griffstücken gebracht. Weitere Möglichkeiten der Durchmesserreduzierung im Griffbereich sind Verschweißen oder Verkleben unterschiedlicher Rohrdurchmesser.

Ein Einzug von einem größeren auf einen kleineren Rohrdurchmesser ist nur in bestimmten Größenordnungen möglich. Bei einer Durchmesserreduzierung unterliegt der Werkstoff hoher plastischer Verformung, es kommt zur Kaltverfestigung. Nachfolgende Biegeprozesse an der Lenkstange führen zu zusätzlicher plastischer Verformung, was die Gefahr von lokaler Materialüberlastung mit sich bringt. Beim Verschweißen unterschiedlicher Rohrdurchmesser ist die Schweißnaht ein prozeßabhängiger Unsicherheitsfaktor für die Lebensdauer der Lenkstange. Es entsteht auch ein erhöhter Herstellungsaufwand, der mit erhöhten Kosten verbunden ist. Das Verkleben von Rohren erfordert zusätzliche Sicherheitsmaßnahmen für die Dauerhaltbarkeit der Lenkstange. Auch hier entstehen höhere Kosten.

Desweiteren hat sich gezeigt, daß bei Lenkstangen, die aus wenigstens zwei sich auf mindestens einem Teilbereich ihrer Länge überlappenden, aneinander fixierten Metallprofilteilen gebaut sind, am Ende des Überlappungsbereichs der Metallprofilteile zum Beispiel Feuchtigkeit zwischen diese eindringen kann. Sind die Metallprofilteile zum Beispiel zwei ineinander verlaufende, konzentrische Rohre, so befindet sich im Bereich der Überlappung der beiden Rohre ein ringförmiger Spalt, zwischen dem Rohr mit großem Außendurchmesser und dem Rohr mit kleinem Außendurchmesser. Durch diesen Spalt ist das Eindringen von Feuchtigkeit zwischen die beiden Rohre ungehindert möglich. Dadurch können sich zwischen den beiden Rohren korrosiv wirkende Medien, wie zum Beispiel wäßrige Feuchte mit gelöstem Streusalz, festsetzen, was zu Korrosion im Spaltbereich der Lenkstange führt. Verstärkt wird die Spaltkorrosion durch den mechanischen Einfluß von Korrosionsprodukten unter Relativbewegung zwischen äußerem und innerem Rohr bei dynamischer Belastung der Lenkstange.

Deshalb ist es Aufgabe der Erfindung, eine Lenkstange, insbesondere für ein Zweirad, gebaut aus wenigstens zwei sich auf mindestens einem Teilbereich ihrer Länge überlappenden, aneinander fixierten Metallprofilteilen, bereitzustellen, bei der auf einfache und preiswerte Weise Korrosion zwischen den beiden Metallprofilteilen verhindert wird.

Die Aufgabe wird erfindungsgemäß mit den Merkmalen des Anspruchs 1 gelöst. Weitere Ausgestaltungen der Erfindung ergeben sich aus den Unteransprüchen.

Nach der Erfindung ist eine Lenkstange, insbesondere für ein Zweirad, die aus wenigstens zwei sich auf mindestens einem Teilbereich ihrer Länge überlappenden, aneinander fixierten Metallprofilteilen gebaut ist, dadurch gekennzeichnet, daß an mindestens einem Ende des Überlappungsbereichs beide Metallprofilteile so durch ein weiteres Bauteil abgedeckt sind, daß das Ende ihres Überlappungsbereichs dauerelastisch abdichtend umgeben ist.

Das hat den Vorteil, daß das Eindringen von Feuchtigkeit zwischen die Metallprofilteile zuverlässig und preiswert verhindert wird und damit korrosive Bedingungen ausgeschlossen werden. Versuche haben ergeben, daß eine solche erfindungsgemäße Lösung, Korrosion zum Beispiel am Spalt zwischen zwei sich überlappenden Lenkerrohren einer Rohr in Rohr Lenkstange zu vermeiden, zu einem besseren Ergebnis geführt hat, wie zum Beispiel eine Verzinkung am Umfang des Innenrohrs der Lenkstange oder eine kathodische Tauchlackierung der gebauten Lenkstange.

Das abdichtende Abdecken des Endes des Überlappungsbereichs der beiden Metallprofilteile der Lenkstange erbrachte bei Versuchen überraschend eine hervorragende Korrosionsschutzwirkung, während sich ergab, daß die kathodische Tauchlackierung nicht ausreichend in den Spalt eindringen kann und bei einer Beschichtung im Spalt durch Kapillarwirkung korrosiv wirkende Medien von der Vorbehandlung im Spalt zurückbleiben, die die Korrosion unter Umständen sogar noch fördern.

Bei einer vorteilhaften Ausführung der Erfindung ist das weitere Bauteil ein Schlauch aus dauerelastischem Material, der das Ende des Überlappungsbereichs beider Metallprofilteile umgibt und jeweils mit einem seiner beiden Enden an jeweils einem Metallprofilteil angebracht ist. Alternativ kann das weitere Bauteil auch ein Schrumpfschlauch sein, der das Ende des Überlappungsbereichs beider Metallprofilteile umgibt und dort auf seiner ganzen Länge oder mindestens mit seinen beiden Enden aufgeschrupft befestigt ist.

Beide Ausführungsformen haben bei unterschiedlicher Montageart den Vorteil, daß der Spalt zwischen den Metallprofilteilen zwar verschlossen wird, aber Relativbewegung der Metallprofile gegeneinander möglich sind. Entsprechend den Verhältnissen bei der Montage kann dann vorteilhafterweise die günstigste Ausführungsform ausgewählt werden.

Nach einer bevorzugten Ausführung der Erfindung ist eine Lenkstange, insbesondere für ein Zweirad, die aus wenigstens zwei teilweise ineinander verlaufenden und aneinander fixierten Metallprofilteilen gebaut ist, dadurch gekennzeichnet, daß die Fixierung der beiden Metallprofilteile aneinander mindestens durch eine Formschlußverbindung erreicht wird, die durch Verformen wenigstens eines der Metallprofilteile im Überlappungsbereich nach deren Zusammenbau entsteht.

Das hat den Vorteil, daß die beiden Metallprofilteile direkt durch einen Verformungsvorgang beim Herstellen der Lenkstange miteinander formschlüssig verbunden werden. Dabei können sie so zueinander positioniert werden, daß der Querschnittsverlauf der Lenkstange ein sich änderndes Widerstandsmoment besitzt, das entsprechend den während des Betriebs der Lenkstange auftretenden Kräften und/oder Momenten ausgelegt ist. Vorteilhafterweise kann der Überlappungsbereich der beiden Metallprofilteile im wesentlichen an einer Stelle der Lenkstange beginnen, wo entsprechend der während des Betriebs der Lenkstange auftretende Kräfte und/oder Momente ein größeres Widerstandsmoment durch größeren Querschnitt der Lenkstange erforderlich ist, oder wo die Anbringung weiterer Bauteile an der Lenkstange einen größeren Querschnitt und/oder Umfang der Lenkstange erfordert.

Bei einer bevorzugten Ausführung der Erfindung kann zum Beispiel ein äußeres Metallprofilteil ein inneres Metallprofilteil nicht vollständig umgeben.

Das ergibt vorteilhafterweise im Verlauf der Lenkstange mindestens einen Stufensprung des Widerstandsmoments. Dieser Stufensprung kann an einer Stelle vorgesehen werden, ab der während des Betriebs der Lenkstange mindestens ein größeres Widerstandsmoment gefordert ist.

Außerdem kann eine weitere bevorzugte Ausführung der Erfindung vorsehen, daß das äußere Metallprofilteil das innere Metallprofilteil dort mindestens teilweise umgibt, wo die Anbringung weiterer Bauteile an der Lenkstange einen größeren Querschnitt und/oder Umfang der Lenkstange erfordert.

Dadurch wird vorteilhafterweise sichergestellt, daß Verbindungen zu anderen Bauteilen, über die Kräfte und/oder Momente übertragen werden, ebenfalls beanspruchungsgerecht ausgebildet werden können.

Bei einer weiteren vorteilhaften Ausführung der Erfindung werden als Metallprofilteile zwei ineinander verlaufende konzentrische Rohre verwendet. Dies macht die Herstellung besonders einfach, bei preiswertem Halbzeug. Wird der Außendurchmesser des inneren Rohres so gewählt, daß er vor der Verformung kleiner ist als der Innendurchmesser des äußeren Rohres, und daß beide ineinander verlaufenden Rohre vor der Verformung mindestens eine Spielpassung bilden, ist die Herstellung der Lenkstange besonders einfach, weil die beiden Rohre leicht ineinander geschoben werden können.

Eine weitere vorteilhafte Ausführung der Lenkstange zeichnet sich dadurch aus, daß diese bezüglich einer Zweiradmittenebene im wesentlichen symmetrisch aufgebaut ist und daß ein Mittelteil der Lenkstange aus beiden Metallprofilteilen, insbesondere beiden Rohren, aufgebaut ist, während zwei außen liegende Teile der Lenkstange vom inneren Metallprofilteil, insbesondere vom inneren Rohr gebildet werden.

Ein solcher Lenkstangenaufbau ist besonders beanspruchungsgerecht, was Widerstandsmoment und geforderten Lenkstangenquerschnitt am Mittelteil und an den Griffteilen betrifft.

Dabei ist bei einer weiteren bevorzugten Ausführung der Erfindung die Verbindung der beiden Metallprofilteile dann sehr einfach herzustellen. wenn das Mittelteil der Lenkstange mindestens eine Biegestelle aufweist.

Wenn zwischen beiden Metallprofilteilen, insbesondere beiden Rohren, mindestens eine Schicht aus elastomerem und/oder schwingungsdämpfendem Material eingebracht ist, hat das den weiteren Vorteil, daß an der Lenkstange eine Vibrationsentkopplung stattfindet. Auf die Griffteile werden dann die Vibrationen des Mittelteils vorteilhafterweise abgeschwächt übertragen.

Ein bevorzugtes Ausführungsbeispiel der Erfindung ist in der nachfolgenden Beschreibung mit der zugehörigen Zeichnung dargestellt. Es zeigen:
- Figur 1: eine Ansicht einer erfindungsgemäßen Lenkstange von unten und
- Figur 2: eine weitere Lenkstange in einer Ansicht von vorn.

Beide Figuren enthalten Hilfslinien, die zur Darstellung der Erfindung nicht nötig sind, aber die Position der einzelnen Lenkstangenabschnitte im Raum besser kenntlich machen.

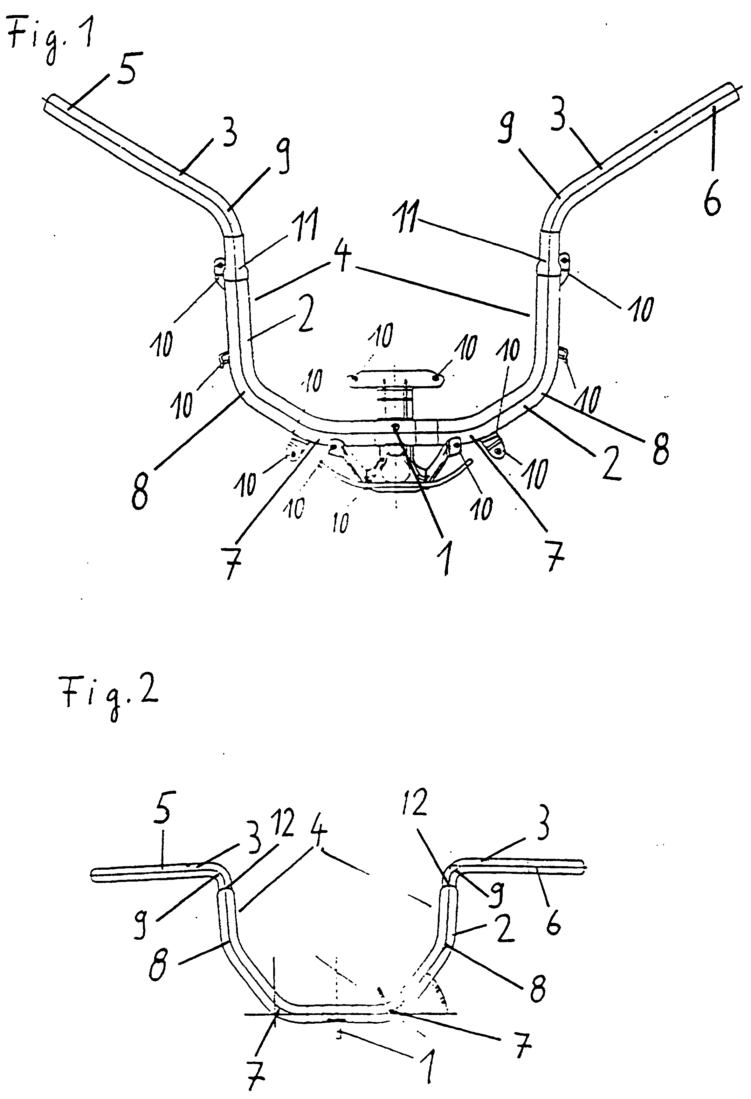

Nach den Figuren 1 und 2 besteht eine Lenkstange aus zwei ineinander verlaufenden Metallrohren. Sie ist bezüglich einer Zweiradmittenebene symmetrisch aufgebaut und dort um eine nicht gezeichnete Lenkachse drehbar über ein Befestigungselement 1 angebracht.

Ausgehend vom Befestigungselement 1 verläuft jeweils nach beiden Seiten dasselbe äußere Rohr 2, das ein inneres Rohr 3 teilweise umgibt. Dazu wurde bei der Herstellung der Lenkstange das innere Rohr 3, mit einem Außendurchmesser kleiner als ein Innendurchmesser des äußeren Rohres 2, durch das äußere Rohr 2 vollständig hindurchgeführt und beide Rohre 2,3 bezüglich der Zweiradmittenebene symmetrisch zu einer Lenkstange durch Biegen verformt. Ein mittlerer Teil 4 der Lenkstange besteht deshalb aus beiden Rohren 2, 3, während zwei äußere Teile der Lenkstange, Griffstücke 5, 6 umfassend, nur aus dem inneren Rohr 3 bestehen.

Der mittlere Teil 4 der Lenkstange besitzt ein größeres Widerstandsmoment und einen größeren Durchmesser als die Griffstücke 5, 6. Ausgehend von der Zweiradmittenebene wird die Lenkstange so verformt, daß zu jeder Seite hin drei Biegestellen 7, 8, 9 entstehen. Die Biegestellen 7 und 8 stellen die Formschlußverbindung zwischen dem inneren Rohr 3 und dem äußeren Rohr 2 sicher. Die beiden Rohre 2, 3 sind dadurch unverschiebbar miteinander verbunden. Die Biegestelle 9 bildet den Übergang vom mittleren Teil 4 zu den Griffstücken 5,6, außerhalb des äußeren Rohres 2, wozu nur das innere Rohr 3 verformt wurde.

Das innere Rohr 3 besitzt einen Außendurchmesser, der geeignet ist, ergonomisch ideales Umfassen der Lenkstange zu gewährleisten, zum Beispiel über einen an der Lenkstange angebrachten, nicht gezeichneten Handgriff.

Das äußere Rohr 2 überlappt auf dem ganzen Bereich seiner Länge das innere Rohr 3. An den Enden des Überlappungsbereichs der Rohre 2 und 3, die bei dieser Ausführungsform auch den Enden des äußeren Rohrs 2 entsprechen, sind beide Rohre 2,3 durch jeweils einen Schrumpfschlauch 11 abgedeckt, der das Ende ihres Überlappungsbereichs dauerelastisch abdichtend umgibt und dort auf seiner ganzen Lange aufgeschrupft befestigt ist. Die Schrumpfschläuche 11 dichten die in Figur 1 nicht sichtbaren Umfangsspalte zwischen den beiden Rohren 2,3 ab und verhindern so das Eindringen von Feuchtigkeit in den Spaltbereich.

Im Überlappungsbereich der beiden Rohre 2,3 liegen die Biegestellen 7,8, die als Formschlußverbindung die Fixierung der beiden Rohre 2,3 aneinander gewährleisten. Der Überlappungsbereich der beiden Rohre 2,3 beginnt im wesentlichen an einer Stelle der Lenkstange, ab dem während des Betriebs der Lenkstange die auftretenden Kräfte und/oder Momente ein höheres Widerstandsmoment der Lenkstange erfordern und wo die Anbringung weiterer Bauteile 10 an der Lenkstange einen größeren Querschnitts und/oder Umfang der Lenkstange erfordert.

In Figur 2 sind die Schrumpfschläuche 11 nicht gezeichnet. Dadurch werden, dargestellt durch Konturlinien 12 an den Enden des äußeren Rohrs 2, die Spalte zwischen den beiden Rohren 2,3 sichtbar, zu deren Abdichtung die Schrumpfschläuche 11 am Ende des Überlappungsbereichs der beiden Rohre 2,3 über deren Außenumfang aufgeschrumpft sind (Figur 1).

## Patentansprüche

1. Lenkstange, insbesondere für ein Zweirad, gebaut aus wenigstens zwei sich auf mindestens einem Teilbereich ihrer Länge überlappenden, aneinander fixierten Metallprofilteilen, **dadurch gekennzeichnet, daß** an mindestens einem Ende des Überlappungsbereichs beide Metallprofilteile so durch ein weiteres Bauteil abgedeckt sind, daß das Ende ihres Überlappungsbereichs dauerelastisch abdichtend umgeben ist.

2. Lenkstange nach Anspruch 1, **dadurch gekennzeichnet, daß** das weitere Bauteil ein Schlauch aus dauerelastischem Material ist, der das Ende des Überlappungsbereichs beider Metallprofilteile umgibt und jeweils mit einem seiner beiden Enden an jeweils einem Metallprofilteil angebracht ist.

3. Lenkstange nach Anspruch 1, **dadurch gekennzeichnet, daß** das weitere Bauteil ein Schrumpfschlauch (11) ist, der das Ende des Überlappungsbereichs beider Metallprofilteile umgibt und dort auf seiner ganzen Länge oder mindestens mit seinen beiden Enden aufgeschrupft befestigt ist.

4. Lenkstange nach einem der Ansprüche 1 bis 3, **dadurch gekennzeichnet, daß** die Fixierung der beiden Metallprofilteile aneinander mindestens durch eine Formschlußverbindung erreicht wird, die durch Verformen wenigstens eines der Metallprofilteile im Überlappungsbereich nach deren Zusammenbau entsteht.

5. Lenkstange nach einem der Ansprüche 1 bis 4, **dadurch gekennzeichnet, daß** der Überlappungsbereich der beiden Metallprofilteile im wesentlichen an einer Stelle der Lenkstange beginnt, wo während des Betriebs der Lenkstange auftretende Kräfte und/oder Momente ein höheres Widerstandsmoment der Lenkstange erfordern.

6. Lenkstange nach einem der Ansprüche 1 bis 5, **dadurch gekennzeichnet, daß** der Überlappungsbereich der beiden Metallprofilteile im wesentlichen an einer Stelle der Lenkstange beginnt, wo die Anbringung weiterer Bauteile (10) an der Lenkstange einen größeren Querschnitt und/oder Umfang der Lenkstange erfordert.

7. Lenkstange nach einem der Ansprüche 1 bis 6, **dadurch gekennzeichnet, daß** die Metallprofilteile zwei ineinander verlaufende konzentrische Rohre (2,3) sind.

8. Lenkstange nach Anspruch 7, **dadurch gekennzeichnet, daß** der Außendurchmesser des inneren Rohres (3) vor der Verformung kleiner ist als der Innendurchmesser des äußeren Rohres (2), so daß die ineinander verlaufenden Rohre (2,3) vor der Verformung mindestens eine Spielpassung bilden.

9. Lenkstange nach einem der Ansprüche 1 bis 8, **dadurch gekennzeichnet, daß** diese bezüglich einer Zweiradmittenebene im wesentlichen symmetrisch aufgebaut ist und daß ein Mittelteil (4) der Lenkstange aus beiden Metallprofilteilen, insbesondere beiden Rohren (2,3), aufgebaut ist, während zwei außen liegende Teile der Lenkstange vom inneren Metallprofilteil, insbesondere vom inneren Rohr (3) gebildet werden, wobei beide Enden des Überlappungsbereichs der Metallprofilteile, insbesondere der Rohre (2,3), durch jeweils ein weiteres Bauteil dauerelastisch abdichtend umgeben sind.

10. Lenkstange nach Anspruch 9, **dadurch gekennzeichnet, daß** das Mittelteil (4) der Lenkstange mindestens eine Biegestelle (7,8) aufweist.

11. Lenkstange nach einem der Ansprüche 1 bis 10, **dadurch gekennzeichnet, daß** zwischen beiden Metallprofilteilen, insbesondere beiden Rohren (2,3), eine weitere Schicht aus elastomerem und/oder schwingungsdämpfendem Material eingebracht ist.

## Claims

1. A handlebar, especially for a bicycle, made up of two metal profile parts fixed together and overlapping over at least a part of their length, **characterised in that** at at least one end of the overlap region, the two metal profile parts are so covered by an additional component that the end of the overlap region is surrounded by a permanently elastic seal.

2. A handlebar according to claim 1, **characterised in that** the additional component is a flexible tube of permanently elastic material which surrounds the end of the overlap region between the two metal profile parts and is attached at each end to a respective metal profile part.

3. A handlebar according to claim 1, **characterised in that** the additional component is a heat-shrinkable sleeve (11) which surrounds the end of the overlap region between the metal profile parts and is fastened by shrinking on along its entire length or at least at both ends.

4. A handlebar according to any of claims 1 to 3, **characterised in that** the two metal profile parts are fixed together by at least one positive connection made by deforming at least one of the metal profile parts in the overlap region after they have been fitted together.

5. A handlebar according to any of claims 1 to 4, **characterised in that** the overlap region between the two metal profile parts begins on the handlebar substantially at a place where forces and/or torques occurring during operation require an increase in the section modulus of the handlebar.

6. A handlebar according to any of claims 1 to 5, **characterised in that** the overlap region between the two metal profile parts begins substantially at a place on the handlebar where attachment of other components (10) to the handlebar requires an increase in the cross-section and/or periphery thereof.

7. A handlebar according to any of claims 1 to 6, **characterised in that** the metal profile parts are two concentric tubes (2, 3) extending in one another.

8. A handlebar according to claim 7, **characterised in that** the outer diameter of the inner tube (3) before deformation is smaller than the inner diameter of the outer tube (2), so that the tubes (2, 3) at least fit loosely in one another before deformation.

9. A handlebar according to any of claims 1 to 8, **characterised in that** it is substantially symmetrical relative to a central plane of the bicycle and a middle part (4) of the handlebar is made up of two metal profile parts, especially two tubes (2, 3), whereas two outer parts of the handlebar are formed by the inner metal profile part, more especially by the inner tube (3), wherein both ends of the overlap region between the metal profile parts, especially the tubes (2, 3), are surrounded by an additional component in permanently elastic sealing-tight manner.

10. A handlebar according to claim 9, **characterised in that** the middle part (4) of the handlebar has at least one bending place (7, 8).

11. A handlebar according to any of claims 1 to 10, **characterised in that** an additional layer of elastomeric and/or vibration-damping material is inserted between the two metal profile parts, especially the two tubes (2, 3).

## Revendications

1. Guidon, notamment pour un deux-roues, construit à partir d'au moins deux parties de profilé métallique fixées l'une avec l'autre et se chevauchant sur au moins une zone partielle de leur longueur,
**caractérisé en ce qu'**
à une extrémité au moins de la zone de chevauchement, les deux parties de profilé métallique sont recouvertes par un autre élément de telle sorte que l'extrémité de leur zone de chevauchement est entourée de manière étanche à élasticité permanente.

2. Guidon selon la revendication 1,
**caractérisé en ce que**
l'autre élément est une gaine en matériau à élastique durable qui entoure l'extrémité de la zone de chevauchement des deux parties de profilé métallique et une de ses deux extrémités vientsur une partie de profilé métallique respective.

3. Guidon selon la revendication 1,
**caractérisé en ce que**
l'autre élément est une gaine thermorétractable (11) qui entoure l'extrémité de la zone de chevauchement des deux parties de profilé métallique et y est fixée par rétraction sur toute sa longueur ou au moins avec ses deux extrémités.

4. Guidon selon l'une des revendications 1 à 3,
**caractérisé en ce que**
la fixation des deux parties de profilé métallique l'une avec l'autre est obtenue au moins par une liaison par complémentarité de forme, réalisée par une déformation d'au moins une des parties de profilé métallique dans la zone de chevauchement après leur assemblage.

5. Guidon selon l'une des revendications 1 à 4,
**caractérisé en ce que**
la zone de chevauchement des deux parties de profilé métallique commence essentiellement en un endroit du guidon où, pendant le fonctionnement du guidon, les forces générées et/ou les couples exigent un couple de résistance plus élevé du guidon.

6. Guidon selon l'une des revendications 1 à 5,
**caractérisé en ce que**
la zone de chevauchement des deux parties de profilé métallique commence essentiellement en un endroit du guidon où le montage d'autres éléments (10) sur le guidon demandent une section transversale et/ou une circonférence plus grande du guidon.

7. Guidon selon l'une des revendications 1 à 6,
**caractérisé en ce que**
les parties de profilé métallique sont deux tubes concentriques engagées l'un dans l'autre (2, 3).

8. Guidon selon la revendication 7,
**caractérisé en ce que**
avant la déformation, le diamètre extérieur du tube interne (3) est inférieur au diamètre intérieur du tube externe (2), de telle sorte que les tubes venant l'un dans l'autre (2, 3) forment au moins un ajustement libre avant la déformation.

9. Guidon selon l'une des revendications 1 à 8,
**caractérisé en ce qu'**
il est essentiellement symétrique par rapport au plan central du deux-roues et une partie centrale (4) du guidon est construite à partir de deux parties de profilé métallique, notamment de deux tubes (2, 3), tandis que deux parties extérieures du guidon sont formées par une partie de profilé métallique interne, notamment par un tube interne (3), les deux extrémités de la zone de chevauchement des parties de profilé métallique, notamment des tubes (2, 3) étant entourées chaque fois de manière étanche à élasticité durable.

10. Guidon selon la revendication 9,
**caractérisé en ce que**
la partie centrale (4) du guidon présente au moins une zone cintrée (7, 8).

11. Guidon selon l'une des revendications 1 à 10,
**caractérisé en ce que**
entre les deux parties de profilé métallique, notamment les deux tubes (2, 3), une autre couche en matériau élastomère et/ou amortissant les vibrations est déposée.
